# FASCICULE DE BREVET EUROPEEN

(11) **EP 1 107 660 B1**
(45) Date de publication et mention de la délivrance du brevet: **05.03.2003**
(21) Numéro de dépôt: 00946015.5
(22) Date de dépôt: 23.06.2000
(51) Int. Cl.: A01G 3/08

(54) **EFFEUILLEUSE MECANIQUE A GAZ COMPRIME**
MECHANISCHE DRUCKLUFTABBLÄTTERUNGSVORRICHTUNG
MECHANICAL LEAF STRIPPER OPERATING ON COMPRESSED GAS

(30) Priorité: 24.06.1999 FR 9908204
(43) Date de publication de la demande: 20.06.2001
(73) Titulaire: Etablissements Collard SA, 51150 Bouzy (FR)
(72) Inventeur: COLLARD, Michel, F-51150 Bouzy (FR)
(74) Mandataire: Gérardin, Robert Jean René
(86) Numéro de dépôt international: FR0001779
(87) Numéro de publication internationale: WO01000008

(56) Documents cités:
- FR-A- 2 289 112
- FR-A- 2 543 792
- FR-A- 2 712 461

## Description

La présente invention concerne une effeuilleuse mécanique à gaz comprimé, destinée à réaliser un effeuillage important ou partiel de plantes, notamment de la vigne, avant vendanges, ou précoce durant le printemps.

On connaît déjà des effeuilleuses mécaniques à gaz comprimé qui présentent de nombreux avantages par rapport aux procédés et dispositifs précédemment utilisés, à savoir les effeuillages manuels, mécaniques, chimiques et thermiques.

On connaît notamment l'effeuilleuse mécanique à gaz comprimé décrite dans le document FR 2.543.792, qui comporte des buses disposées en extrémité de tubulures solidarisées radialement à un distributeur rotatif, de manière que lesdites buses décrivent une trajectoire circulaire, sur une ou plusieurs parties de laquelle elle est apte à souffler, puisque lesdites buses tournent derrière un capot qui constitue un déflecteur pour la végétation et dans lequel sont pratiquées une ou plusieurs fentes circulaires de même rayon correspondant à la trajectoire des buses, en sorte de limiter ou non les zones d'action de celles-ci. Il est également possible que le distributeur soit adapté à ne délivrer de l'air que lorsque les buses décrivent un secteur angulaire donné.

Cette effeuilleuse, bien que d'un rendement supérieur à celui des autres, présente de nombreux inconvénients. En effet, la pression nécessaire à l'effeuillage est trop importante, ce qui provoque des blessures sur les fruits et les graines. Ce phénomène est amplifié par la température élevée de l'air soufflé qui peut atteindre 130°C.

Par ailleurs, cette effeuilleuse n'a pas un rendement suffisant. En effet, la rotation des buses étant combinée au déplacement de l'engin tracteur qui la porte, lesdites buses ne passent qu'une seule fois ou peu de fois au même endroit de la végétation, ce qui oblige parfois à effectuer un second passage ou à se satisfaire d'un effeuillage limité.

On connaît aussi le distributeur rotatif de gaz comprimé, à jets dissemblables, pour machines agricoles à effeuiller les arbres et les arbustes, décrit dans le brevet FR 2.712.461. Ce distributeur comporte des tubes différemment recourbés, munis d'une buse qui souffle de l'air de façon rotative par des lumières circulaires réalisées dans un carter, vers les arbres ou les plantes, de manière à éliminer uniquement les feuilles devant la zone fructifère, en les soulevant de bas en haut.

Sur ce dispositif, des orientations particulières sont données aux buses, lors de la construction, par un cintrage approprié des tubulures en amont desdites buses ; toutefois, ces orientations, définies à priori, ne permettent pas d'obtenir un rendement satisfaisant dans tous les cas.

Par ailleurs, de manière générale, une effeuilleuse est installée sur un engin tracteur, enjambeur ou non, dont la prise de force entraîne un compresseur d'air, avec pour inconvénient une variation parfois importante de la pression de l'air, qui est fonction de la puissance du tracteur et du relief du terrain, étant donné que l'entraînement du compresseur ne s'effectue pas à vitesse constante. Or il est préférable, pour réaliser un effeuillage efficace, de disposer d'un contrôle de la pression d'air, et d'un contrôle de la vitesse de rotation des buses autour de leur axe de rotation .

La présente invention a pour but de remédier à ces inconvénients. Cette invention, telle qu'elle est caractérisée dans les revendications, résout le problème consistant à créer une effeuilleuse mécanique à gaz comprimé, avec laquelle, d'une part la pression d'air et la vitesse de rotation des buses puissent être contrôlées pendant toute la durée de l'effeuillage, quelles que soient les conditions de réalisation de celui-ci et, d'autre part, le feuillage à éliminer soit sollicité de façon suffisamment efficace pour obtenir une élimination maximum des feuilles en un seul passage.

Les avantages obtenus, grâce à cette invention, consistent essentiellement en ce que tous les paramètres concourant à la qualité de l'effeuillage et permettant, en conséquence, d'adapter celui-ci à des conditions particulières, liées à la nature de la végétation, à son niveau de développement et aux conditions météorologiques, sont réglables, pour la plupart sur le site même, avec possibilité de moduler au cours de l'effeuillage la pression du gaz comprimé et la vitesse de rotation des buses autour de leur axe, pour tenir compte de certaines modifications des conditions déterminées initialement, telle que de l'arrivée de la pluie par exemple.

D'autres caractéristiques et avantages apparaîtront dans la description qui va suivre d'une effeuilleuse à vigne, à quatre buses, réparties régulièrement sur deux cercles concentriques, tournant derrière un déflecteur de végétation à deux fentes semi-circulaires concentriques, donnée à titre d'exemple non limitatif au regard des dessins annexés, sur lesquels:

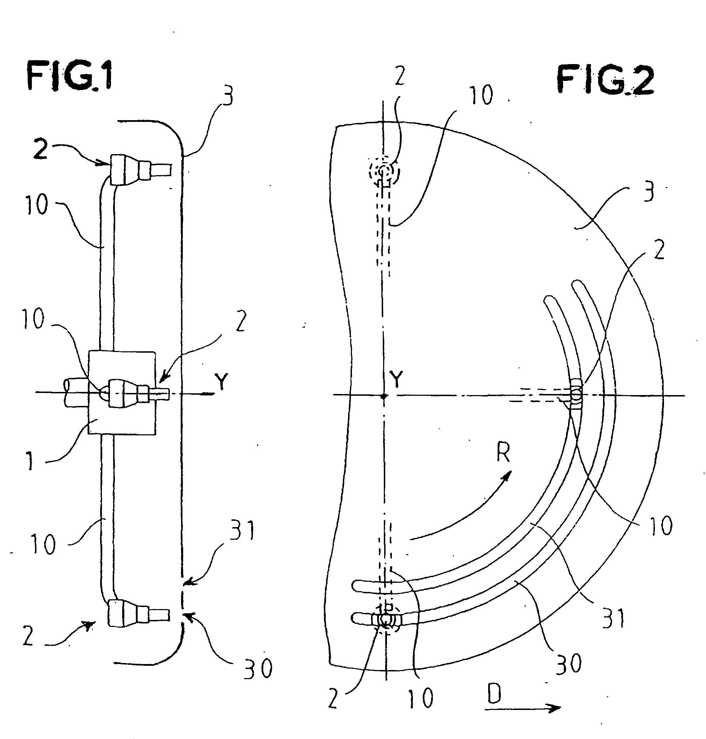

- La figure 1 représente une vue de côté schématique, en coupe, de l'effeuilleuse.
- La figure 2 représente une vue de face schématique partielle de l'effeuilleuse.
- La figure 3 représente une vue de côté en perspective et en coupe partielle, d'un distributeur rotatif de gaz comprimé, équipé des moyens de réglage de l'écartement des buses par rapport à leur axe de giration Y.
- La figure 4 représente une vue de face, en perspective, d'une effeuilleuse équipée d'un masque d'adaptation des fentes du déflecteur au rayon de giration des buses.
- La figure 5 représente une vue de face, en perspective, d'une effeuilleuse équipée d'un disque rotatif d'adaptation du déflecteur de végétation aux rayons de giration des buses,
- Les figures 6a et 6b représentent schématiquement le montage en tandem de deux effeuilleuses.

Les figures représentent l'effeuilleuse à vigne donnée à titre d'exemple comportant un distributeur rotatif 1, auquel sont reliées des tubulures 10, munies de buses 2, disposées derrière un déflecteur de végétation 3, muni de fentes sectorielles 30, 31 pouvant être réalisées dans un masque 32 permettant de limiter localement l'action des jets de gaz.

Cette configuration permet, en combinant le déplacement, dans le sens de la flèche D, du tracteur qui porte l'effeuilleuse, et la rotation, dans le sens de la flèche R, des buses 2, de souffler plusieurs fois de suite au même endroit, en évitant ainsi un second passage ou procurant un effeuillage plus intense lors d'un unique passage.

On notera qu'il est possible de remplacer les fentes 30 et 31 par une seule fente plus large couvrant les deux trajectoires.

D'autre part, dans le mode de réalisation représenté, les fentes 30 et 31 couvrent un angle d'environ 120°. Il est bien entendu possible qu'elles couvrent un angle différent.

Ainsi, le jet peut faire un angle alpha compris entre 0 et 45° avec la perpendiculaire à la tubulure 10, sachant que de préférence, cet angle est de 15°, cette position étant représentée par un axe X.

Toutefois, l'efficacité du soufflage, lorsque les buses sont disposées selon ces différentes positions angulaires, est liée à l'emplacement des fentes 30 et 31. Ainsi, un effeuillage efficace est obtenu, d'une part, lorsque le soufflage est réalisé selon un angle tel que défini ci-dessus, lorsque les fentes 30 et 31 sont disposées dans la partie avant du déflecteur 3 dans le sens de l'avance de la machine, et, d'autre part encore, lorsque le sens de rotation R du distributeur 1 fait décrire aux buses 2 les fentes 30 et 31 du bas vers le haut.

Par ailleurs, l'effeuilleuse, selon l'invention, comporte, en sortie du compresseur qui alimente les buses en gaz comprimé, un système de régulation de la pression qui comporte, outre un manomètre de contrôle de la pression, une soupape de sécurité apte à être tarée à une pression donnée et une vanne manoeuvrable manuellement ou électroniquement à partir du poste de conduite du tracteur, et un système de contrôle de la vitesse de rotation des buses durant le travail .

Le système de régulation de ces deux paramètres permet d'adapter l'effeuillage au type de végétation à traiter, à la période d'intervention et aux paramètres du tracteur qui porte l'effeuilleuse.

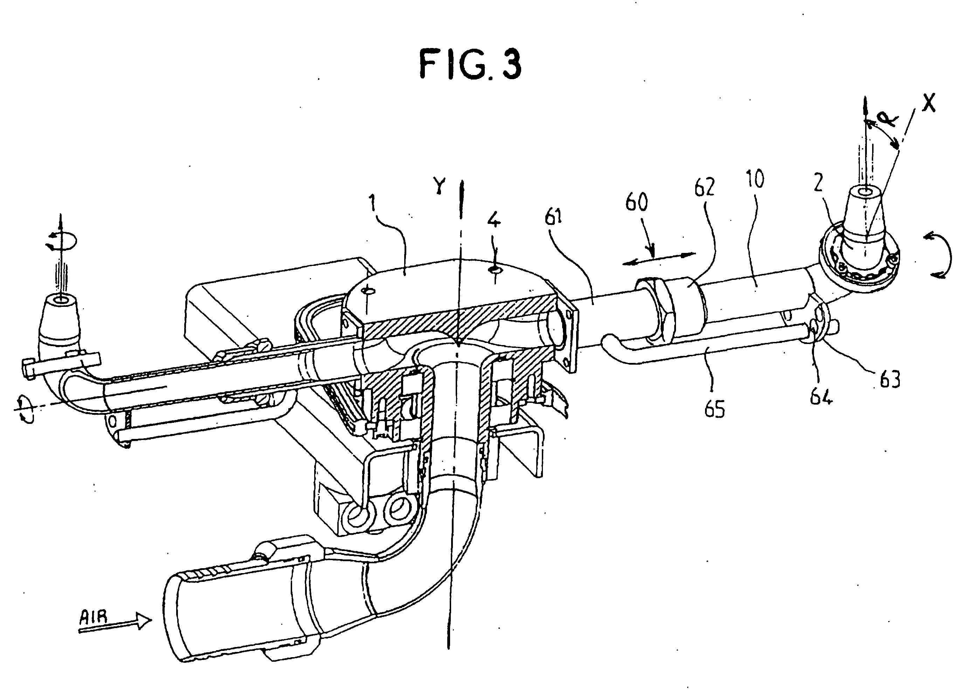

En se reportant maintenant à la figure 3, on remarque que les buses 2 fixées aux extrémités des tubulures, sont reliées au distributeur 1 par l'intermédiaire d'un dispositif de réglage 60 de leur écartement et de leur inclinaison dans un plan perpendiculaire aux dites tubulures, par l'intermédiaire respectivement de manchons 61, fixés radialement au distributeur 1 comportant à leurs extrémités un mandrin de serrage 62 dans lesquels les tubulures sont montées coulissantes. Comme on le voit, il est donc possible ainsi, de positionner radialement les buses 2 et si nécessaire de leur donner des inclinaisons alpha particulières par rapport à l'axe Y du distributeur 1 par l'intermédiaire de collerettes semi-circulaires 63 à orifices de réglage 64 fixées perpendiculairement aux tubulures 10 dans l'un desquels pénétre une tige d'indexation 65 fixée à chaque manchon 61, parallèlement à celui-ci.

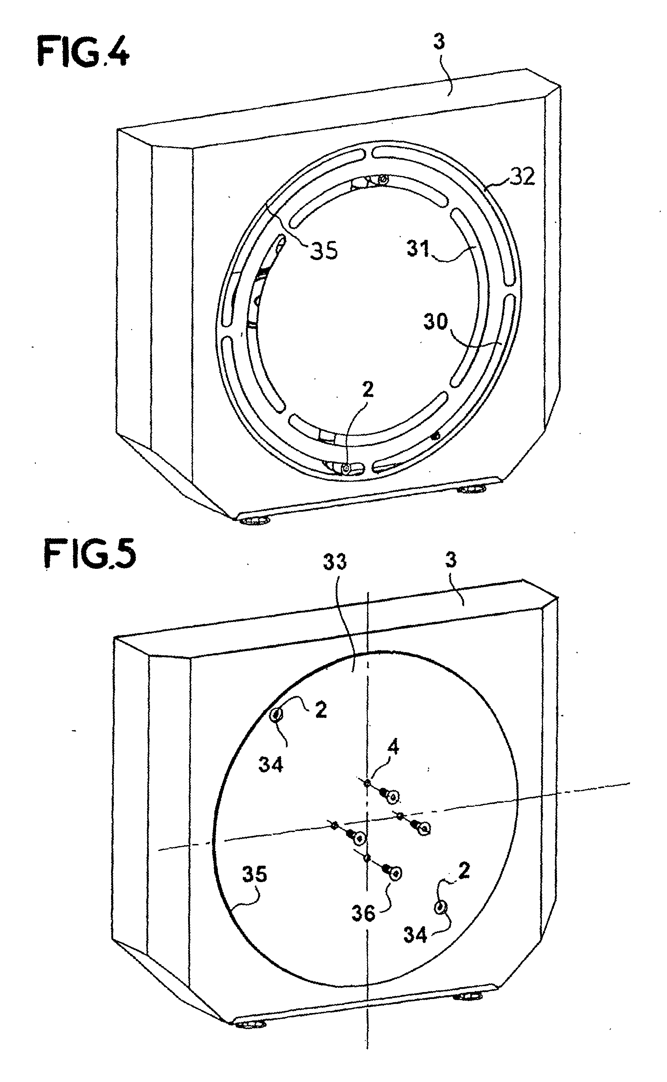

En examinant la figure 4 on remarque que, dans ce mode de réalisation, les fentes circulaires 30 et 31 ont été réalisées dans un masque 32 qui vient se loger devant une ouverture 35 réalisée dans la paroi du déflecteur de végétation 3, ce qui permet, par permutation de masques, de modifier instantanément les caractéristiques des fentes 30 et 31, sous réserve d'avoir réalisé auparavant une gamme de masques 3 2 couvrant sensiblement tous les cas d'effeuillage.

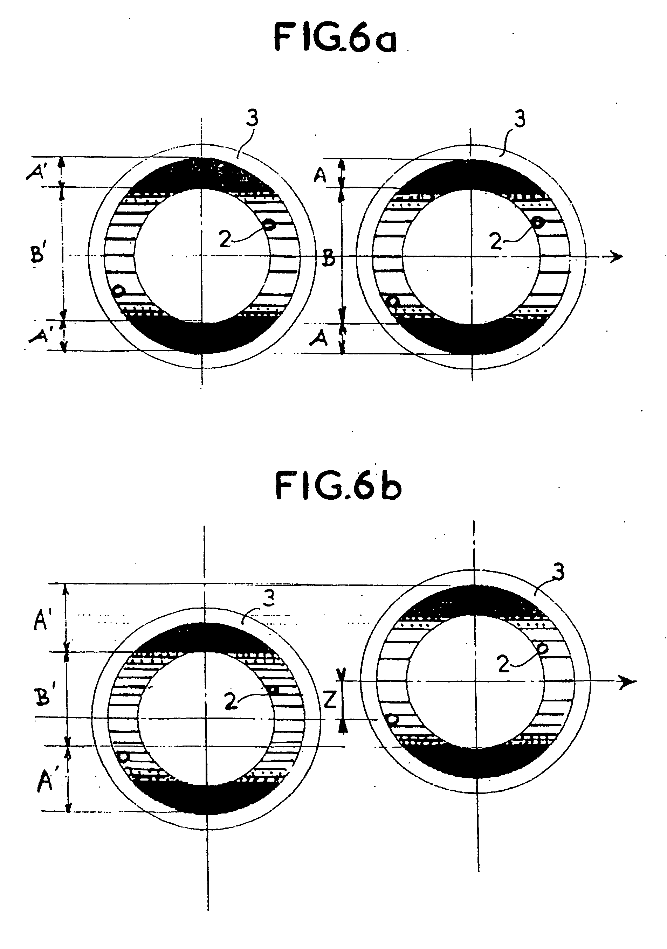

En se reportant maintenant à la figure 5, on constate que, dans cet autre mode de réalisation, un disque 33 solidaire en rotation des buses 2 par fixation, à l'aide de vis 36 montés dans des orifices filetés 4 contre le distributeur 1, est disposé dans l'ouverture 35 réalisée dans le déflecteur. Les jets de gaz comprimé traversent le disque 33 par des orifices 34 situés devant chaque buse 2. D'autres orifices (non représentés) réalisés à des distances différentes par rapport à l'axe Y peuvent être prévus pour permettre des différents réglages du rayon de giration des buses 2.

En examinant maintenant successivement les figures 6a et 6b, on remarque tout d'abord, sur la figure 6a, que l'effeuillage est différent selon des zones A et B couvertes lors du déplacement de l'effeuilleuse correspondant respectivement aux parties hautes et basses et à la partie centrale de celle-ci. La zone d'effeuillage maximum correspondant aux zones A, et la zone d'effeuillage minimum à la zone B : ceci compte-tenu de la forme circulaire des fentes 30, 31 et du déplacement linéaire de l'effeuilleuse.

On remarque, sur la figure 6b qu'il est possible d'augmenter la largeur des zones A pour obtenir des zones A', en réduisant la zone B', par montage en tandem de deux effeuilleuses, comme représenté à la figure 6a, puis décalage de celles-ci d'une distance Z dans le sens de la hauteur.

Il est possible aussi, par ce moyen, outre, de renforcer encore l'efficacité de l'effeuillage ou de modérer celui-ci en agissant sur la distance Z, séparant verticalement les deux effeuilleuses, afin, par exemple, de protéger les zones fructifères.

## Revendications

1. Effeuilleuse mécanique à gaz comprimé du type comportant des buses disposées en extrémité de tubulures solidarisées radialement à un distributeur rotatif du gaz comprimé, régulièrement réparties autour de ce distributeur, tournant derrière un déflecteur de végétation permettant le passage des jets de gaz comprimé ; ladite effeuilleuse comportant un moyen de régulation de la pression de gaz et de la vitesse de rotation du distributeur, **caractérisée en ce que** les buses **(2)** sont réparties sur des cercles de giration concentriques de rayon différent, **en ce qu'**elle comporte un moyen de réglage radial de la position des buses **(2)** par rapport à l'axe **(Y)** de rotation du distributeur **(1) en ce qu'**elle comporte un moyen permettant d'adapter les caractéristiques du déflecteur au rayon de giration des buses **(2)** ainsi qu'aux conditions et à la nature de l'effeuillage, et **en ce que** la valeur de consigne de la régulation de la pression de gaz et de la vitesse de rotation du distributeur est réglable au cours de l'effeuillage en fonction des conditions de celui-ci, à partir de l'engin porteur.

2. Effeuilleuse selon la revendication 1, **caractérisée en ce que** le moyen d'adaptation du rayon de giration des buses **(2)** par rapport à l'axe **(Y)** de rotation du distributeur **(1)** est constitué de manchons **(61)** à mandrin de serrage **(62)** fixés radialement au distributeur **(1)**, dans lesquels les tubulures **(10)** sont montées coulissantes.

3. Effeuilleuse selon la revendication 1, **caractérisée en ce que** l'axe **(X)** des buses est sensiblement parallèle à l'axe **(Y)** de rotation du distributeur.

4. Effeuilleuse selon la revendication 1, **caractérisée en ce que** le moyen permettant d'adapter les caractéristiques du déflecteur aux rayons de giration des buses **(2)** ainsi qu'aux conditions et à la nature de l'effeuillage, est constituée d'un jeu de masques **(32)** à fentes **(30,31)** destinés à venir se loger individuellement devant une ouverture **(35)** réalisée dans la paroi du déflecteur de végétation **(3)**.

5. Effeuilleuse selon la revendication 1, **caractérisée en ce que** le moyen permettant d'adapter les caractéristiques du déflecteur aux rayons de giration des buses **(2)** ainsi qu'aux conditions et à la nature de l'effeuillage, est constitué d'un jeu de disques **(33)** muni d'orifices **(34)** de passage des jets de gaz, solidarisables en rotation avec les buses **(2)**, destinés à venir se loger dans une ouverture **(35)** réalisée dans la paroi du déflecteur de végétation **(3)** coaxialement à l'axe **(Y)** du distributeur rotatif **(1)**.

6. Effeuilleuse selon la revendication 4, **caractérisée en ce que** la largeur des fentes, dont le déflecteur de végétation est muni, est déterminée de façon à permettre le passage commun des jets de gaz comprimés produits par les buses **(2)** situées sur des cercles de giration concentriques de rayon voisin.

7. Procédé d'effeuillage mettant en oeuvre l'effeuilleuse selon les revendications 1 à 6 ci-dessus, **caractérisé en ce qu'**il consiste à associer deux effeuilleuses, disposées l'une derrière l'autre, et à décaler celles-ci verticalement d'une distance **(Z)** déterminée en fonction de la hauteur et de la largeur des bandes de végétation à effeuiller et du résultat à obtenir.

## Patentansprüche

1. Mechanischer Druckgasentlauber von der Art, die Düsen umfasst, die am Ende von Rohrstutzen angeordnet sind, die radial an einem Druckgasdrehverteiler einstückig sind, gleichmäßig um diesen Verteiler verteilt sind, der sich hinter einem Vegetationsdeflektor dreht, der den Durchgang der Druckgasstrahlen erlaubt; wobei der Entlauber ein Mittel zur Regulierung des Gasdrucks und der Drehgeschwindigkeit des Verteilers umfasst, **dadurch gekennzeichnet, dass** die Düsen (2) auf konzentrischen Wendekreisen mit unterschiedlichen Radien verteilt sind, dass er ein Mittel zur radialen Einstellung der Düsenstellung (2) zu der Drehachse (Y) des Verteilers (1) umfasst, dass er ein Mittel umfasst, das es ermöglicht, die Merkmale des Deflektors dem Wenderadius der Düsen (2) sowie den Bedingungen und der Art des Entlaubens anzupassen, und dass der Sollwert der Gasdruck- und Drehgeschwindigkeits-regulierung des Verteilers im Verlauf des Entlaubens je nach den Bedingungen desselben von einem Traggerät aus einstellbar ist.

2. Entlauber nach Anspruch 1, **dadurch gekennzeichnet, dass** das Mittel zur Anpassung des Wenderadius der Düsen (2) im Verhältnis zur Drehachse (Y) des Verteilers (1) aus Muffen (61) mit Spannfutter (62) besteht, die radial an dem Verteiler (1) befestigt sind, in welche die Rohrstutzen (10) verschiebbar eingebaut sind.

3. Entlauber nach Anspruch 1, **dadurch gekennzeichnet, dass** die Achse (X) der Düsen im Wesentlichen parallel zur Drehachse (Y) des Verteilers liegt.

4. Entlauber nach Anspruch 1, **dadurch gekennzeichnet, dass** das Mittel, das erlaubt, die Merkmale des Deflektors den Wenderadien der Düsen (2) sowie den Bedingungen und der Art des Entlaubens anzupassen, aus einem Satz Masken (32) mit Schlitzen (30, 31) besteht, die dazu gedacht sind, sich individuell vor eine in der Wand des Vegetationsdeflektors (3) angebrachten Öffnung (35) festzusetzen.

5. Entlauber nach Anspruch 1, **dadurch gekennzeichnet, dass** das Mittel, das erlaubt, die Merkmale des Deflektors den Wenderadien der Düsen (2) sowie den Bedingungen und der Art des Entlaubens anzupassen, aus einem Satz Scheiben (33) besteht, der mit Löchern (34) zum Durchgang der Gasstrahlen versehen ist, die drehbar mit den Düsen (2) einstückig gemacht werden können und dazu gedacht sind, sich in eine koaxial zur Achse (Y) des Drehverteilers (1) in der Wand des Vegetationsdeflektors (3) angebrachte Öffnung (35) festzusetzen.

6. Entlauber nach Anspruch 4, **dadurch gekennzeichnet, dass** die Breite der Schlitze, mit denen der Vegetationsdeflektor versehen ist, derart bestimmt ist, dass der gemeinsame Durchgang der Druckgasstrahlen, die von den Düsen (2) erzeugt werden, die sich auf konzentrischen Wendekreisen mit benachbartem Radius liegen, ermöglicht wird.

7. Entlaubungsverfahren zum Einsatz des Entlaubers nach den vorhergehenden Ansprüchen 1 bis 6, **dadurch gekennzeichnet, dass** es darin besteht, zwei Entlauber zu verknüpfen, die hintereinander angeordnet sind, und diese senkrecht um einen Abstand (Z) zu versetzen, der je nach Höhe und Breite der zu entlaubenden Vegetationsbänder und dem zu erzielenden Ergebnis bestimmt wird.

## Claims

1. Mechanical foliage thinning machine operated by compressed gas, of the type having nozzles disposed at the end of tubes radially joined to a rotating compressed gas distributor and arranged at regular intervals around this distributor, rotating behind a vegetation deflector making a passage for jets of compressed gas, said leaf-thinning machine having a means for controlling the gas pressure and rotation speed of the distributor, **characterised in that** the nozzles **(2)** are distributed in concentric circles of gyration of differing radius, **in that** it has means for radially controlling the position of the nozzles **(2)** relative to the rotation axis **(Y)** of the distributor **(1)**, **in that** it has a means enabling the characteristics of the deflector to be adapted to the gyration radius of the nozzles **(2)** and to the conditions and nature of the foliage, and **in that** the reference value by which the gas pressure and rotation speed of the distributor is controlled can be adjusted from the carrying appliance during the foliage thinning process, depending on the conditions thereof.

2. Foliage thinning machine as claimed in claim 1, **characterised in that** the means for adapting the gyration radius of the nozzles **(2)** relative to the rotation axis **(Y)** of the distributor **(1)** consists of bushes **(61)** with a chuck **(62)** radially attached to the distributor **(1)**, in which the tubes **(10)** are slidingly mounted.

3. Foliage thinning machine as claimed in claim 1, **characterised in that** the axis **(X)** of the nozzles is substantially parallel with the rotation axis **(Y)** of the distributor.

4. Foliage thinning machine as claimed in claim 1, **characterised in that** the means enabling the characteristics of the deflector to be adapted to the gyration radii of the nozzles **(2)** and to the conditions and nature of the foliage consists of a set of grills **(32)** with slits **(30, 31)** designed to be individually mounted in front of an aperture **(35)** provided in the wall of the vegetation deflector **(3)**.

5. Foliage thinning machine as claimed in claim 1, **characterised in that** the means enabling the characteristics of the deflector to be adapted to the gyration radii of the nozzles **(2)** and to the conditions and nature of the foliage consists of a set of discs **(33)** provided with orifices **(34)** to allow the gas jets to pass through, which may rotate integrally with the nozzles **(2)**, designed to fit in an aperture **(35)** provided in the wall of the vegetation deflector **(3)** coaxially with the axis **(Y)** of the rotary distributor **(1)**.

6. Foliage thinning machine as claimed in claim 4, **characterised in that** the width of the slits provided on the vegetation deflector is selected so as to provide a common passage for the jets of compressed gas generated by the nozzles **(2)** disposed on the concentric gyration circles of adjacent radius.

7. Method of thinning foliage using the foliage thinning machine as claimed in the preceding claims 1 to 6, **characterised in that** it consists in working with two foliage thinning machines disposed one behind the other and offsetting them vertically by a given distance **(Z)** depending on the height and the width of the rows of vegetation to be thinned and the result to be obtained.
